# EUROPEAN PATENT APPLICATION

(11) **EP 2 551 079 A1**
(43) Date of publication of application: **30.01.2013**
(21) Application number: 12176866.7
(22) Date of filing: 18.07.2012
(51) Int. Cl.: B26F 1/14

(54) **Resin sheet, method of producing the same and through-hole forming apparatus**

(30) Priority: 29.07.2011 JP 2011167224
(71) Applicant: NITTO DENKO CORPORATION, Osaka 567 (JP)
(72) Inventor: Suehiro, Ichiro, Osaka, 567-8680 (JP)
(74) Representative: HOFFMANN EITLE

(57) **Abstract**

A method of producing a resin sheet (2) includes the steps of arranging a resin sheet (2) between a substrate (4) and a die (5) opposed to the substrate, and forming a through-hole (3) in the resin sheet (2) to pass through the resin sheet (2) in a pressing direction by relatively pressing the die (5) against the substrate (4). The die (5) includes a first protrusion (7) protruding toward a downstream side in the pressing direction. A second protrusion (9) protruding toward the downstream side in the pressing direction is formed on a peripheral edge portion of an end portion of the first protrusion on the downstream side in the pressing direction. An end portion of the second protrusion (9) on the downstream side in the pressing direction is formed at an acute angle in sectional view along the pressing direction.

## Description

### BACKGROUND OF THE INVENTION

### Field of the Invention

The present invention relates to a resin sheet, a method of producing the same and a through-hole forming apparatus, and more specifically, it relates to a method of producing a resin sheet, a resin sheet obtained according to the method, and a through-hole forming apparatus employed for the method.

### Description of Related Art

It is known that a resin sheet is employed in various industrial fields such as medical, biochemical and electrical fields and provided with through-holes passing through the same in the thickness direction in response to the object and the application thereof.

For example, there has been proposed a method of forming through-holes in a thin plastic film by holding the thin plastic film between a die having a generally comb-shaped section and a counter substrate in the form of a flat plate opposed thereto, thereafter fluidizing the thin plastic film by heating, pressurizing the thin plastic film, and thereafter separating the die and the counter substrate from each other (refer to Japanese Unexamined Patent Publication No. 2006-142711, for example).

In the method described in Japanese Unexamined Patent Publication No. 2006-142711, resin forming the thin plastic film is expelled by approximating the forward end portion of the die to the counter substrate when the plastic tin film is pressurized by the die and the counter substrate.

### SUMMARY OF THE INVENTION

According to Japanese Unexamined Patent Publication No. 2006-142711, the through-holes are formed by pressing the forward end portion of the die against the counter substrate to the utmost when pressurizing the same with the counter substrate thereby expelling the resin.

According to this method, however, the resin cannot be completely expelled but remains in the peripheral edge portions of the through-holes, to disadvantageously result in flashes. Thus, the through-holes cannot be correctly formed in the thin plastic film.

An object of the present invention is to provide a method of forming a resin sheet allowing correct formation of through-holes, a resin sheet obtained according to the method, and a through-hole forming apparatus employed for the method.

The method of producing a resin sheet according to the present invention includes the steps of arranging a resin sheet between a substrate and a die opposed to the substrate, and forming a through-hole in the resin sheet to pass through the resin sheet in a pressing direction by relatively pressing the die against the substrate, wherein the die includes a first protrusion protruding toward a downstream side in the pressing direction, a second protrusion protruding toward the downstream side in the pressing direction is formed on a peripheral edge portion of an end portion of the first protrusion on the downstream side in the pressing direction, and an end portion of the second protrusion on the downstream side in the pressing direction is formed at an acute angle in sectional view along the pressing direction.

Preferably in the method of producing a resin sheet according to the present invention, an angle of the end portion of the second protrusion on the downstream side in the pressing direction is 30 to 75° in sectional view along the pressing direction.

Preferably in the method of producing a resin sheet according to the present invention, the length of the second protrusion in the pressing direction is 20 to 200 µm.

Preferably in the method of producing a resin sheet according to the present invention, the first protrusion is formed into a pillarlike shape, and a recess portion surrounded by the second protrusion and concaved toward an upstream side in the pressing direction is formed on the first protrusion on the downstream side in the pressing direction.

The resin sheet according to the present invention is a resin sheet obtained by a method of producing a resin sheet including the steps of arranging the aforementioned resin sheet between a substrate and a die opposed to the substrate, and forming a through-hole in the resin sheet to pass through the resin sheet in a pressing direction by relatively pressing the die against the substrate, wherein the die includes a first protrusion protruding toward a downstream side in the pressing direction, a second protrusion protruding toward the downstream side in the pressing direction is formed on a peripheral edge portion of an end portion of the first protrusion on the downstream side in the pressing direction, and an end portion of the second protrusion on the downstream side in the pressing direction is formed at an acute angle in sectional view along the pressing direction.

The through-hole forming apparatus according to the present invention is a through-hole forming apparatus for forming a through-hole in a resin sheet to pass through the resin sheet in the thickness direction, including a substrate, and a die opposed to the substrate for relatively pressing the substrate, wherein the die includes a first protrusion protruding toward a downstream side in the pressing direction, a second protrusion protruding toward the downstream side in the pressing direction is formed on a peripheral edge portion of an end portion of the first protrusion on the downstream side in the pressing direction, and an end portion of the second protrusion on the downstream side in the pressing direction is formed at an acute angle in sectional view along the pressing direction.

In each of the method of producing a resin sheet and the through-hole forming apparatus according to the present invention, the end portion of the second protrusion on the downstream side in the pressing direction is formed at an acute angle in sectional view along the pressing direction, whereby the end portion of the second protrusion on the downstream side in the pressing direction can pass through the resin sheet in the thickness direction to come into contact with the substrate while efficiently expelling the resin sheet when the die is relatively pressed against the substrate.

In the resin sheet, therefore, the end portion of the second protrusion on the downstream side in the pressing direction reliably partitions the resin sheet into an inner portion and an outer portion and separates the same from each other.

Consequently, a through-hole can be correctly formed in the resin sheet according to the present invention by removing the inner portion from the resin sheet.
The foregoing and other objects, features and effects of the present invention will become more apparent from the following detailed description of the embodiments with reference to the attached drawings.

### BRIEF DESCRIPTION OF THE DRAWINGS

FIG. 1 is a sectional view of a through-hole forming apparatus according to an embodiment of the present invention.
FIG. 2 is a bottom plan view of a die of the through-hole forming apparatus shown in FIG. 1.
FIG. 3 is an enlarged sectional view of first and second protrusions of the die of the through-hole forming apparatus shown in FIG. 1.
FIG. 4 is a partially fragmented perspective view of the die of the through-hole forming apparatus shown in FIG. 1.
FIGS. 5(a), 5(b), 5(c) and 5(d) successively illustrate steps of forming a resin sheet on the upper surface of a substrate, pressing down a die, pulling up the die and separating the resin sheet from the substrate in a method of forming through-holes in the resin sheet with the through-hole forming apparatus shown in FIG. 1.
FIGS. 6(a), 6(b), 6(c) and 6(d) successively illustrate steps of forming a resin sheet on the upper surface of a substrate, pressing down a die, pulling up the die and separating the resin sheet from the substrate in a method of forming through-holes in the resin sheet with a through-hole forming apparatus according to comparative example.
FIG. 7 is an enlarged sectional view of a (generally tubular) first protrusion and a second protrusion of a die of a through-hole forming apparatus according to another embodiment of the present invention.
FIG. 8 is an enlarged sectional view of a first protrusion (generally frustumic in section) and a second protrusion of a die of a through-hole forming apparatus according to still another embodiment of the present invention.
FIG. 9 is an enlarged sectional view of a first protrusion and a second protrusion (in the form of an acute triangle in section) of a die of a through-hole forming apparatus according to a further embodiment of the present invention.

### DETAILED DESCRIPTION OF THE EMBODIMENTS

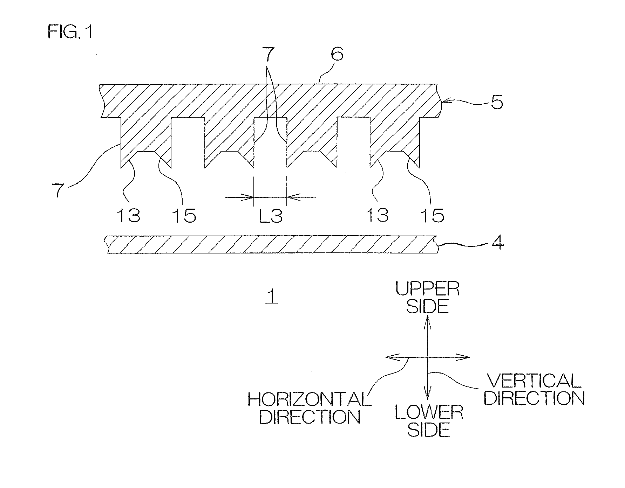

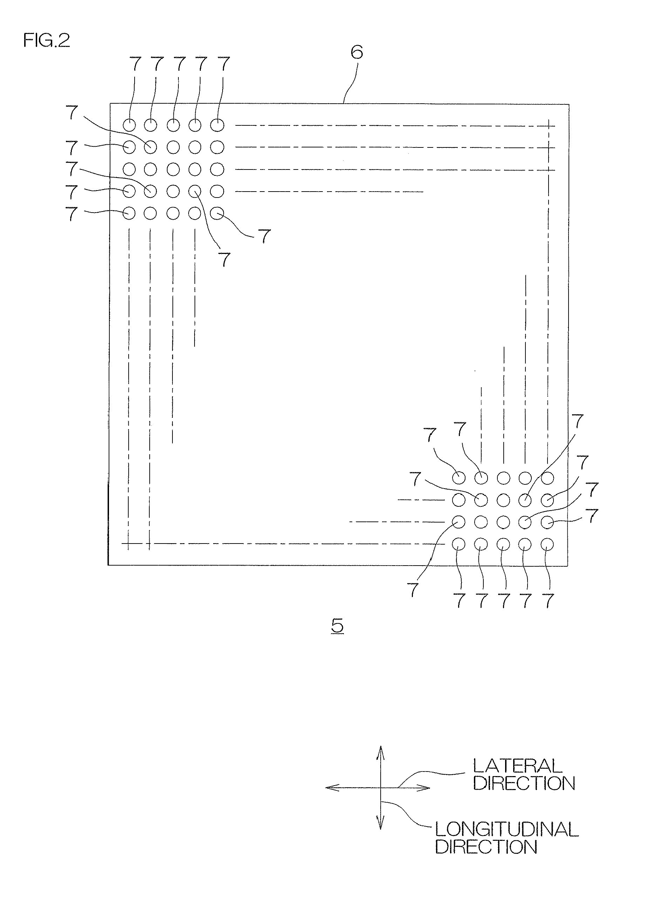

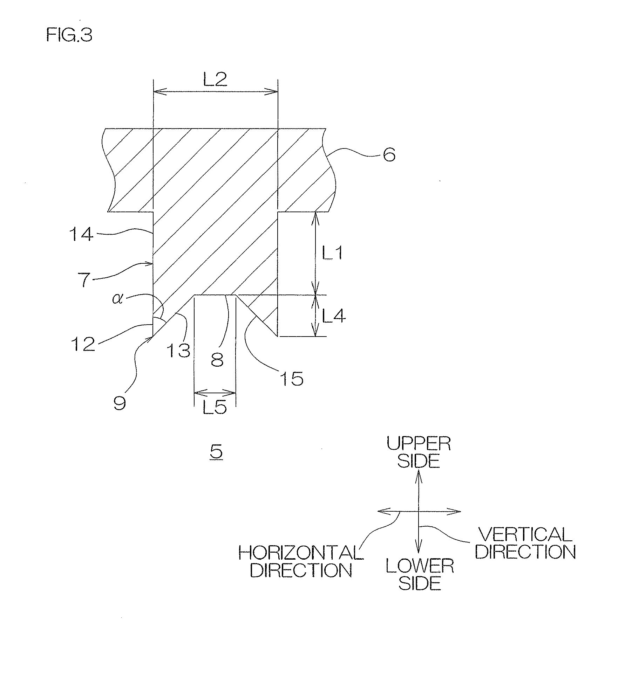

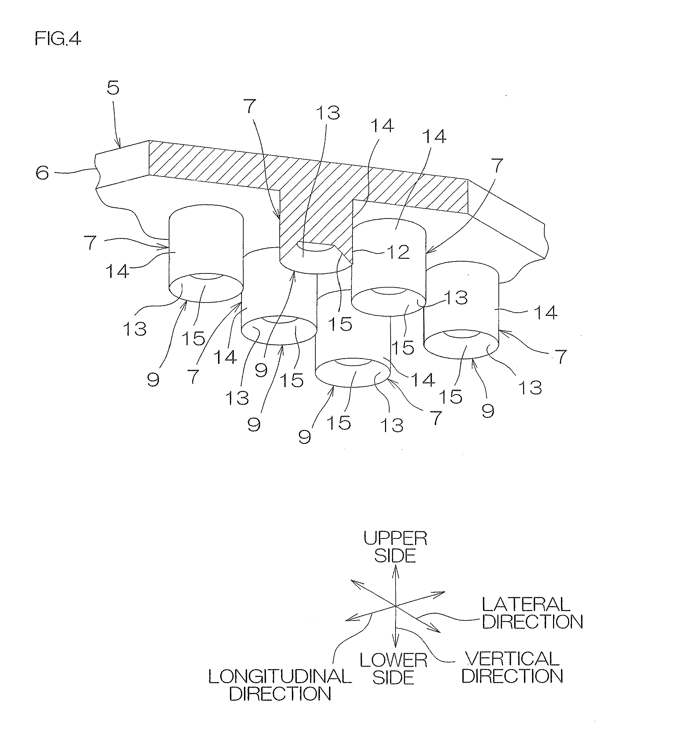

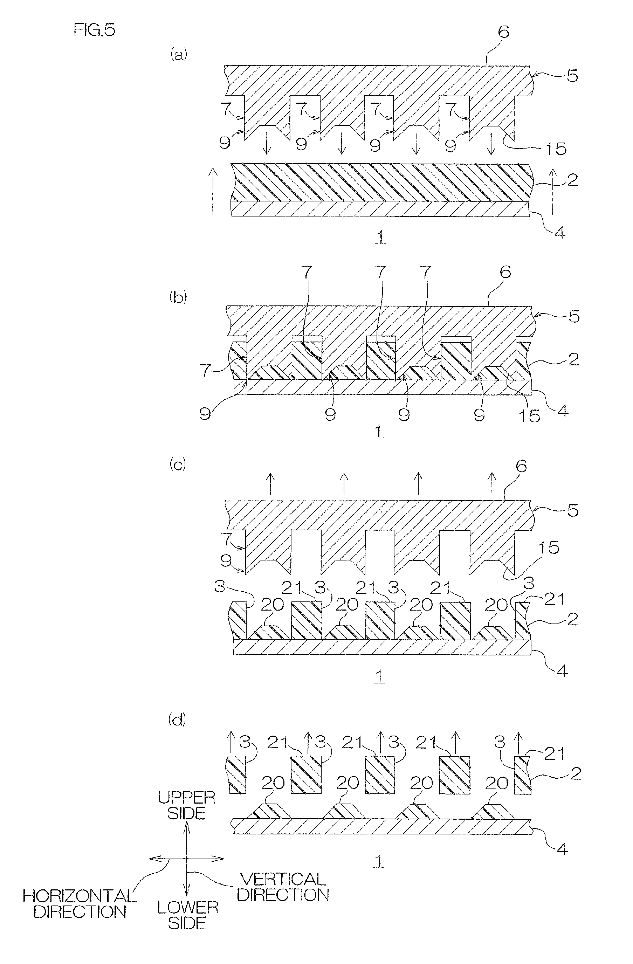

FIG. 1 is a sectional view of a through-hole forming apparatus according to an embodiment of the present invention, FIG. 2 is a bottom plan view of a die of the through-hole forming apparatus shown in FIG. 1, FIG. 3 is an enlarged sectional view of first and second protrusions of the die of the through-hole forming apparatus shown in FIG. 1, FIG. 4 is a partially fragmented perspective view of the die of the through-hole forming apparatus shown in FIG. 1, and FIGS. 5(a) to 5(d) illustrate steps in a method of forming through-holes in a resin sheet with the through-hole forming apparatus shown in FIG. 1.

Referring to FIG. 1, a through-hole forming apparatus 1 is employed for forming through-holes 3 (described later: see FIG. 5(d)) in a resin sheet 2 (described later: see FIG. 5(a)).

The through-hole forming apparatus 1 is a press (i.e., a hot press) capable of simultaneously heating and pressurizing (pressing) the resin sheet 2 (see FIG. 5a)).

The through-hole forming apparatus 1 includes a substrate 4 and a die 5.

The substrate 4, generally in the form of a rectangular flat plate, is provided on the lower side of the through-hole forming apparatus 1. More specifically, the substrate 4 is provided along the horizontal direction.

The substrate 4, prepared from a material preventing the same from excess deformation in hot pressing (described later: see FIG. 5(b)) and having releasability from the resin sheet 2, can be made of a resin material including polyolefin such as polyethylene or polypropylene, for example, or polyester such as polyethylene terephthalate or polyethylene naphthalate, for example, a metallic material such as iron, aluminum, nickel or stainless, for example, or a ceramic material such as silicon or glass, for example. The substrate 4 is preferably made of a resin material, and more preferably made of polyester.

A mold releasing treatment is performed on the surfaces (at least the upper surface) of the substrate 4 as necessary.

The Young's modulus of the substrate 4 is, for example not less than 0.1 GPa, and preferably not less than 1.0 GPa, and, for example not more than 5.0 GPa, at a temperature (more specifically, 100 to 180°C) in the hot pressing.

The thickness of the substrate 4 is, for example 1 to 1000 µm, and preferably 5 to 500 µm.

The die 5 is provided on the upper side of the substrate 4. More specifically, the die 5 is normally arranged above the substrate 4 to be opposed thereto at a distance.

The die 5 integrally includes a flat plate portion 6 along the horizontal direction and a plurality of first protrusions 7 protruding downward from the flat plate portion 6.

The flat plate portion 6, provided on an upper portion of the die 5, is generally in the form of a rectangular plate in plan view as shown in Fig. 2, and shaped to correspond to the outer shape of the die 5 when projected in the vertical direction.

The first protrusions 7 are provided correspondingly to the through-holes 3 (see FIG. 5(d)) of the resin sheet 2. More specifically, the first protrusions 7 are formed to continuously protrude downward from the lower end portion of the flat plate portion 6 in generally columnar shapes, as shown in FIGS. 3 and 4. The first protrusions 7 are so formed that the axes thereof are along the vertical direction.

As shown in FIG. 3, a lower end surface 8 of each of the first protrusions 7 has a planar central portion along the horizontal direction.

As shown in FIG. 2, the plurality of first protrusions 7 are arranged at intervals from one another in the horizontal direction in bottom plan view. The first protrusions 7 are aligned in a plurality of lines in the longitudinal direction and in a plurality of lines in the lateral direction.

As shown in FIGS. 3 and 4, downwardly protruding second protrusions 9 are formed on peripheral edge portions of lower end portions of the first protrusions 7.

The second protrusions 9 are circumferentially continuously formed along the peripheral edge portions of the lower end portions of the first protrusions 7. More specifically, the second protrusions 9 are generally annularly formed (in the form of rings) in bottom plan view.

Diametrical outer end portions of the second protrusions 9 are formed on the same positions as the peripheral edge portions of the first protrusions 7 (excluding the lower end portions) in bottom plan view. More detailedly, the diametrical outer end portions of the second protrusions 9 form diametrical outer peripheral surfaces 12, which in turn are flush with diametrical outer peripheral surfaces 14 of the first protrusions 7 (excluding the lower end portions) in the vertical direction.

On the other hand, diametrical inner end portions of the second protrusions 9 are formed on diametrical intermediate portions of the first protrusions 7 when projected in the thickness direction. In other words, the diametrical inner end portions of the second protrusions 9 are formed on diametrical intermediate portions of the lower end surfaces 8 of the first protrusions 7 in bottom plan view. Diametrical inner peripheral surfaces (lower surfaces) 13 of the second protrusions 9 are formed as inclined surfaces diametrically outwardly spreading downward (diametrically outwardly advancing obliquely downward).

Therefore, each of the second protrusions 9 is formed as an inverted triangle (a V-shaped triangle: more specifically, a right triangle right-angled on the upper outer portion) by the diametrical outer and inner peripheral surfaces 12 and 13 in sectional view along the vertical direction, as shown in FIG. 3.

The lower end portion of each second protrusion 9 is at an angle, more specifically an acute angle, formed by the diametrical outer surface 12 and inner peripheral surface 13 in sectional view along the vertical direction.

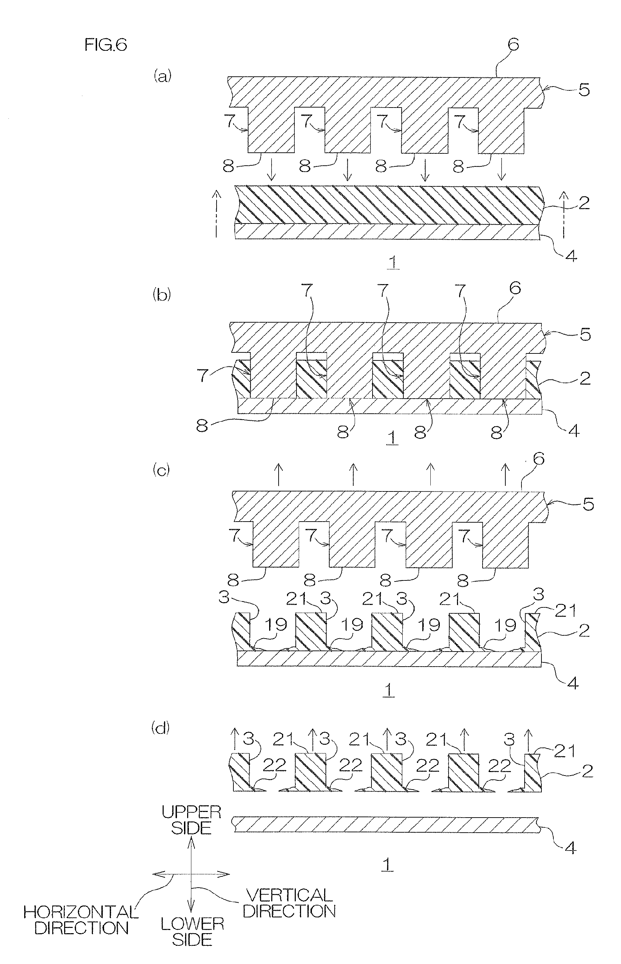

If the lower end portions of the second protrusions 9 are at a right angle (or an obtuse angle), the resin material cannot be completely expelled from the second protrusions 9 and the through-holes 3 cannot be correctly formed in the resin sheet 2, as in comparative example described later with reference to FIGS. 6(a) to 6(d).

Upwardly concaved recess portions 15 surrounded by the second protrusions 9 are formed on the lower sides of the first protrusions 7.

The recess portions 15 are opened downward, and partitioned by the diametrical inner peripheral surfaces 13 of the second protrusions 9 and the lower end surfaces 8 of the first protrusions 7. More specifically, the recess portions 15 are generally in the form of truncated cones gradually spreading in diameter downward. Upper end surfaces of the recess portions 15 (the lower end surfaces 8 of the first protrusions 7) are formed to be continuous to the diametrical inner end portions of the second protrusions 9.

The die 5, prepared from a material having such strength that the lower end portions of the second protrusions 9 can penetrate the resin sheet 2 (see FIG. 5(b)), can be made of the aforementioned metallic material or the aforementioned ceramic material, for example. Preferably, the die 5 is made of the metallic material.

A mold releasing treatment is performed on the surfaces (at least the lower surface and the side surfaces) of the die 5 as necessary.

The dimensions of the die 5 are properly selected in response to the thickness of the resin sheet 2 and the inner diameter of the through-holes 3, and the thickness of the flat plate portion 6 is, for example 20 to 2000 µm, and preferably 50 to 1000 µm.

The length L1 of the first protrusions 7, more specifically the vertical length L1 between the lower end surface of the flat plate portion 6 and the central portions of the lower end surfaces 8 of the first protrusions 7 is 100 to 1000 µm, for example, and preferably 200 to 500 µm.

The outer diameter (the maximum length in the plane direction) L2 of the first protrusions 7 is 50 to 1000 µm, for example, and preferably 100 to 400 µm.

Referring to FIG. 1, the interval (the interval in the longitudinal and lateral directions) L3 between each pair of first protrusions 7 is 50 to 3000 µm, for example, and preferably 100 to 500 µm.

Referring to FIG. 3, the depth (the height) L4 of the second protrusions 9, more specifically the vertical length L4 between the central portions of the lower end surfaces 8 of the first protrusions 7 and the lower end portions of the second protrusions 9 is 20 to 200 µm, for example, and preferably 30 to 100 µm. When the depth L4 of the second protrusions 9 is in the above range, the angle α of the lower end portions of the second protrusions 9 described later can be set in a desired range, and the lower end portions of the second protrusions 9 can reliably penetrate the resin sheet 2 while ensuring rigidity of the second protrusions 9.

The inner diameter (the maximum horizontal length, i.e., the outer diameter of the central portions of the lower end surfaces 8 of the first protrusions 7) L5 of the upper surfaces of the recess portions 15 is not more than 90 %, for example, preferably not more than 85 % and not less than 10 % of the outer diameter L2 of the first protrusions 7. More specifically, the inner diameter L5 is 10 to 500 µm, for example, and preferably 100 to 300 µm.

The angle α of the lower end portions of the second protrusions 9, for example is 30 to 75°, and preferably 40 to 60°.

If the angle α of the lower end portions of the second protrusions 9 exceeds the aforementioned range, the through-holes 3 (see FIG. 5(d)) may not be correctly formed in the resin sheet 2. If the angle α of the lower end portions of the second protrusions 9 is less than the aforementioned range, on the other hand, the second protrusions 9 may be easily damaged.

The aforementioned die 5 is obtained in the aforementioned shape by casting employing a mold corresponding to the aforementioned shape or by pressing (more specifically, pressing employing a parallel plate press, a rubber press or the like), for example.

The through-hole forming apparatus 1 is provided with a power source (including a mechanical or manual power source: this also applies to the following description) and a heat source for relatively hot-pressing the substrate 4 with the die 5 although the sources are not shown in FIG. 1.

In the through-hole forming apparatus 1, the unshown power source presses the die 5 downward while an unshown fixing member vertically fixes the substrate 4, for example, so that the die 5 relatively presses the substrate 4.
In this case as well, the relative pressing direction of the die 5 against the substrate 4 is the direction from the upper side toward the lower side in FIG. 5(a), and the first protrusions 7 protrude from the flat plate portion 6 toward a downstream side in the pressing direction of the die 5 relatively pressing against the substrate 4.

Alternatively, the unshown power source presses the substrate 4 upward while the unshown fixing member vertically fixes the die 5, for example, so that the die 5 can relatively press the substrate 4.

Further alternatively, the unshown power source presses the substrate 4 upward while another unshown power source presses the die 5 downward, so that the die 5 can relatively press the substrate 4.

A method of forming the through-holes 3 in the resin sheet 2 with the through-hole forming apparatus shown in FIG. 1 is now described with reference to FIGS. 5(a) to 5(d).

According to this method, the through-hole forming apparatus 1 shown in FIG. 1 is first prepared.

Then, the resin sheet 2 is arranged between the substrate 4 and the die 5, as shown in FIG. 5(a). More specifically, the resin sheet 2 is formed on the upper surface of the substrate 4.

The resin material forming the resin sheet 2 is not particularly restricted so far as the same has fluidity in the hot pressing (see FIG. 5(b)) in the through-hole forming apparatus 1, the resin sheet 2 can be made of thermosetting resin such as epoxy resin, thermosetting polyimide, phenolic resin, urea resin, melamine resin, unsaturated polyester resin, diallyl phthalate resin, thermosetting silicone resin or thermosetting urethane resin, for example, or thermoplastic resin such as polyolefin (polyethylene, polypropylene or an ethylene-propylene copolymer, for example), acrylic resin (methyl polymethacrylate, for example), polyvinyl acetate, an ethylene-vinyl acetate copolymer, polyvinyl chloride, polystyrene, polyacrylonitrile, polyamide, polycarbonate, polyacetal or polyethylene terephthalate, for example. Preferably, the resin sheet 2 is made of thermosetting resin.

In order to prepare the resin sheet 2 from thermosetting resin, varnish of the thermosetting resin is prepared by blending the thermosetting resin and a well-known solvent with each other and applied onto the upper surface of the substrate 4, and the solvent is thereafter distilled away by heating. If the thermosetting resin is liquid at normal temperature, no solvent is blended therewith but the liquid thermosetting resin is applied onto the upper surface of the substrate 4 and heated.

The thermosetting resin is semi-hardened (in B stage), due to the heating. The heating temperature is 100 to 180°C, for example.

When the resin sheet 2 is made of thermoplastic resin, on the other hand, the resin sheet 2 made of the thermoplastic resin is placed on the upper surface of the substrate 4, for example.

The thickness of the resin sheet 2, properly selected in response to the object and the application thereof, is 1 µm to 10 mm, for example, and preferably 10 µm to 2 mm.

Then, the through-holes 3 vertically passing through the resin sheet 2 are formed in the resin sheet 2, as shown in FIGS. 5(b) to 5(d).

In order to form the through-holes 3 in the resin sheet 2 to vertically pass through the same, the die 5 is first relatively pressed against the substrate 4, as shown in FIG. 5(b).

More specifically, the power source (not shown) presses the die 5 downward as shown by arrows in FIG. 5(a) while the fixing member (not shown) fixes the substrate 4, so that the die 5 presses (more specifically, clamps) the substrate 4.

The pressing force (the pressure) is 0.3 to 2.0 MPa, for example, and preferably 0.5 to 1.5 MPa.

The pressing time (the clamping time) is 1 to 60 minutes, for example, and preferably 5 to 30 minutes.

The substrate 4 can also be heated as necessary, along with the pressing. The heating temperature is 100 to 180°C, for example.

Thus, the lower end portions of the second protrusions 9 of the die 5 enter the resin sheet 2 from the upper surface thereof, then advance toward the lower portion of the resin sheet 2 while pushing the resin material forming the resin sheet 2 toward diametrical inner and outer sides of the lower portions of the second protrusions 9, and thereafter reach the lower surface of the resin sheet 2.

The lower end portions of the second protrusions 9 of the die 5 may slightly sink into (enter) the substrate 4.

Thus, the lower end portions of the second protrusions 9 come into contact with the upper surface of the substrate 4.

On the one hand, portions of the resin material pushed by the lower end portions of the second protrusions 9 toward the diametrical inner sides move into the recess portions 15. On the other hand, other portions of the resin material pushed by the lower end portions of the second protrusions 9 toward the diametrical outer sides move into spaces (communicating spaces) between the first protrusions 7.

The aforementioned pressing is preferably executed as hot pressing.

When made of the thermosetting resin, the resin material is completely hardened (in C stage) due to the hot pressing.

When made of the thermoplastic resin, on the other hand, the resin material is plasticized to exhibit fluidity, whereby the lower end portions of the second protrusions 9 and the upper surface of the substrate 4 more reliably come into contact with one another.

According to this method, the die 5 is thereafter separated from the resin sheet 2 and the substrate 4, as shown in FIG. 5(c). More specifically, the die 5 is pulled upward.

Thus, residual portions 20 corresponding to the recess portions 15 are formed on the resin sheet 2.

The residual portions 20, identical in shape to the recess portions 15, are formed independently of sheet bodies 21 around the recess portions 15.

Thereafter the resin sheet 2 is pulled up from the substrate 4, as shown in FIG. 5(d).

When the resin sheet 2 formed by the sheet bodies 21 is pulled up, the residual portions 20 independent of the sheet bodies 21 are not pulled up but remain adhering to the substrate 4.

Thus, the through-holes 3 are formed in the pulled-up resin sheet 2 to pass through the resin sheet 2 in the thickness direction thereof, i.e., in the vertical direction.

The through-holes 3 are provided in shapes corresponding to the diametrical outer peripheral surfaces 12 (see FIG. 3) of the second protrusions 9 and the diametrical outer peripheral surfaces 14 of the first protrusions 7. More specifically, the through-holes 3 are formed as generally columnar openings having axes along the vertical direction.

According to the aforementioned method and in the through-hole forming apparatus 1, the lower end portions of the second protrusions 7 are at the acute angle in sectional view along the vertical direction. When the die 5 is pressed down to press the substrate 4, therefore, the lower end portions of the second protrusions 7 can pass through the resin sheet 2 in the thickness direction to come into contact with the substrate 4, while efficiently expelling the resin sheet 2.

In the resin sheet 2, therefore, the lower end portions of the second protrusions 7 reliably partition the residual portions 20 and the sheet bodies 21, to isolate the same from one another.

Thus, the through-holes 3 can be correctly formed in the resin sheet 2 by pulling up the resin sheet 2 including the sheet bodies 21.

If no second protrusions 9 are formed on the lower end portions of the first protrusions 7 but the overall lower end surfaces 8 of the first protrusions 7 are planarly formed as shown in FIG. 6(a), the resin material cannot be completely expelled even if the die 5 is pressed downward as shown in FIG. 6(b), although this state is not shown in FIG. 6(b).

When the die 5 is pulled up in this case, residues 19 of the resin material are formed on peripheral edge portions of lower portions of portions to be provided with the through-holes 3 as shown in FIG. 6(c). When the resin sheet 2 is thereafter pulled up, flashes 22 resulting from the residues 19 are formed on the peripheral edge portions of the lower portions of the through-hole 3, as shown in FIG. 6(d).

On the other hand, the resin sheet 2 obtained through the steps shown in FIGS. 5(a) to 5(d) is prevented from formation of flashes 22.

The resin sheet 2 (see FIG. 5(d)) obtained through the steps shown in FIGS. 5(a) to 5(d) is employed in various industrial fields, and preferably employed in medical, biochemical and electrical fields. More specifically, the resin sheet 2 is employed as a mask material described in Japanese Unexamined Patent Publication No. 2010-68728 or the like.

More in detail, the resin sheet 2 is employed in the medical field (more specifically, the regenerative medical field) as a cell culture mask material for producing aggregates corresponding in size to the through-holes 3 by incubating cells in the through-holes 3 and self-assembling the same.

In the biochemical field, the resin sheet 2 is employed as a mask material for producing aggregates having prescribed concentration distribution as necessary and corresponding in size to the through-holes 3 by aggregating fine particles or molecules in the through-holes 3.

In the electrical field, the resin sheet 2 is employed as a mask material for producing a wiring circuit board by depositing metal particles in the through-holes 3 at desired density on a board in patterns corresponding to the through-holes 3.

While the substrate 4 is fixed and the die 5 is pressed downward as shown by arrows in FIG. 5(a) so that the die 5 relatively presses the substrate 4 in the aforementioned embodiment shown in FIGS. 5(a) to 5(d), the die 5 can be fixed so that the substrate 4 is pressed upward as shown by arrows in phantom lines in FIG. 5(a), for example, or the substrate 4 can be pressed upward so that the die 5 is pressed downward.

While the semi-hardened resin sheet 2 is formed by applying the varnish onto the upper surface of the substrate 2 and thereafter heating the same in the step shown in FIG. 5(a) in the case where the resin sheet 2 is made of the thermosetting resin, the semi-hardened resin sheet 2 can alternatively be previously formed on a mold releasing sheet (not shown), to be transferred to the upper surface of the substrate 4 or the lower surface of the die 5, for example.

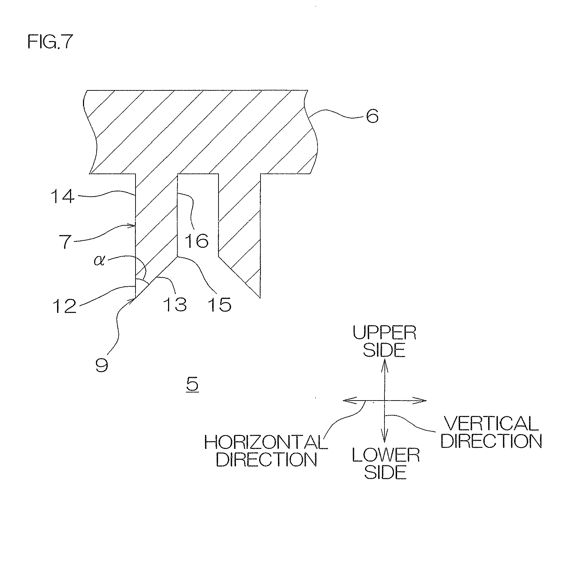

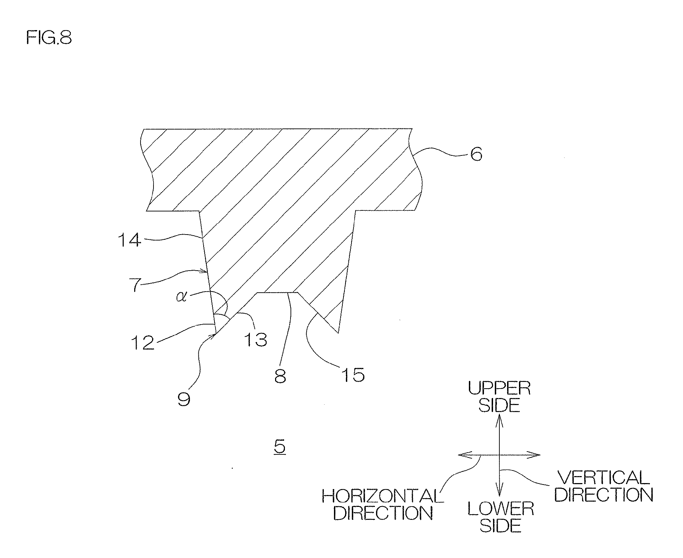

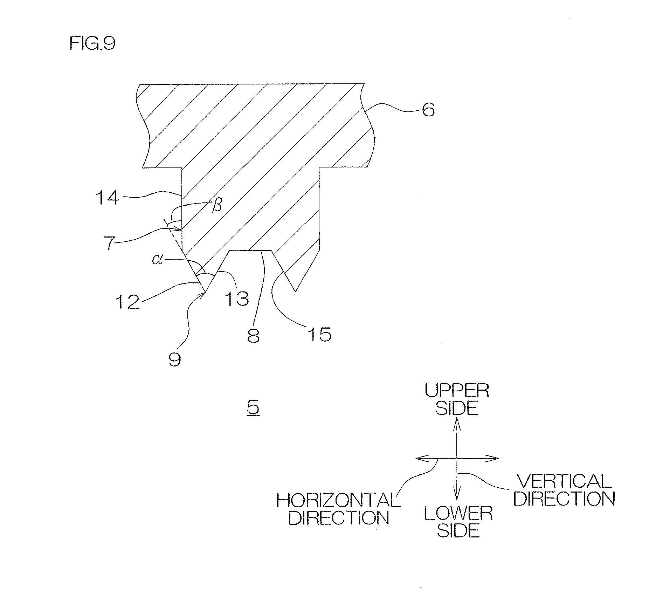

FIG. 7 is an enlarged sectional view of a (generally tubular) first protrusion and a second protrusion of a die of a through-hole forming apparatus according to another embodiment of the present invention, FIG. 8 is an enlarged sectional view of a first protrusion (generally frustumic in section) and a second protrusion of a die of a through-hole forming apparatus according to still another embodiment of the present invention, and FIG. 9 is an enlarged sectional view of a first protrusion and a second protrusion (in the form of an acute triangle in section) of a die of a through-hole forming apparatus according to a further embodiment of the present invention.

Members corresponding to the aforementioned portions are denoted by the same reference signs in the figures referred to in the following description, and redundant description thereof is omitted.

While each of the first protrusions 7 is generally in the form of a solid pillar in the embodiment shown in FIG. 3, each first protrusion 7 can be formed into a generally tubular shape, as shown in FIG. 7, for example.

Referring to FIG. 7, the first protrusion 7 is generally cylindrically formed.

A diametrical inner end portion of a second protrusion 9 is formed on the same position as a diametrical inner peripheral surface 16 of the first protrusion 7 in bottom plan view.

Thus, a recess portion 15 is formed as an opening, generally inverted T-shaped (or inverted V-shaped) in section, partitioned by a diametrical inner peripheral surface 13 of the second protrusion 13 and the diametrical inner peripheral surface 16 of the first protrusion 7.

A through-hole forming apparatus 1 including a die 5 having the first protrusion 7 shown in FIG. 7 can also attain functions/effects similar to those of the through-hole forming apparatus 1 including the die 5 having the first protrusion 7 shown in FIG. 3.

When each of the first protrusions 7 is formed into a generally pillarlike shape as shown in FIG. 3, on the other hand, rigidity of the first protrusion 7 can be improved. Therefore, the step of pressing the substrate 4 with the die 5 shown in FIG. 5(b) can be stably carried out, to more correctly form the through-holes 3. Further, the life of the through-hole forming apparatus 1 can be elongated by preventing the first protrusions 7 from damage.

While the first protrusions 7 are provided in the generally columnar shape in the embodiment shown in FIGS. 2 and 3, the shape of the first protrusions 7 is properly selected. For example, the first protrusions 7 can be provided in a generally prismatic shape (not shown).

Each first protrusion 7 may be provided generally frustumic as shown in FIG. 8, for example.

Referring to FIG. 8, the first protrusion 7 is generally in the form of a frustum whose plane sectional area is gradually reduced downward. The generally frustumic shape includes the shape of a generally circular frustum, the shape of a generally truncated pyramid and the like.

A through-hole forming apparatus 1 including a die 5 having the first protrusion 7 shown in FIG. 8 can also attain functions/effects similar to those of the through-hole forming apparatus 1 including the die 5 having the first protrusion 7 shown in FIG. 3.

When each of the first protrusions 7 is provided in the generally columnar shape as shown in FIGS. 2 and 3, on the other hand, perforations having vertical shapes can advantageously be formed in the resin sheet 2.

While each of the second protrusions 9 is provided in the form of a right triangle in sectional view along the vertical direction in the embodiment shown in FIG. 3, each second protrusion 9 can alternatively be provided in the form of an acute triangle as shown in FIG. 9, for example.

Referring to FIG. 9, the second protrusion 9 is so formed that a diametrical outer peripheral surface 12 thereof intersects with a diametrical outer peripheral surface 14 of a first protrusion 7. An angle β formed by the diametrical outer peripheral surface 12 of the second protrusion 9 and the diametrical outer peripheral surface 14 of the first protrusion 7 in sectional view along the vertical direction is 5 to 30°, for example.

A through-hole forming apparatus 1 including a die 5 having the second protrusion 9 shown in FIG. 9 can also attain functions/effects similar to those of the through-hole forming apparatus 1 including the die 5 having the second protrusion 9 shown in FIG. 3.

### Examples

While the present invention is now described in more detail with reference to Examples and comparative examples, the present invention is not restricted thereto.

### Example 1

### (Preparation of Through-Hole Forming Apparatus)

First, a through-hole forming apparatus including a substrate made of polyethylene terephthalate and a die made of nickel was prepared (see FIGS. 1 to 3).

The substrate was in the form of a rectangular flat plate and had a Young's modulus of 3 GPa at 160°C, and the surfaces thereof were subjected to a mold releasing treatment. The substrate was 10 mm by 10 mm in size, and had a thickness of 50 µm.

The die integrally included a flat plate portion in the form of a rectangular flat plate and columnar first protrusions, and the surfaces thereof were subjected to a mold releasing treatment.

The thickness of the flat plate portion was 200 µm.

The first protrusions were aligned in 20 lines in the longitudinal direction and 20 lines in the lateral direction at intervals from one another (see FIG. 2). Each first protrusion had a length (L1) of 200 µm (see FIG. 3) and an outer diameter (L2) of 300 µm (see FIG. 3), and the interval (L3) between each pair of first protrusions was 200 µm (see FIG. 1).

Second protrusions in the form of inverted triangles in sectional view along the vertical direction were formed on peripheral edge portions of lower end portions of the first protrusions (see FIG. 3).

The depth (L4) of the second protrusions was 100 µm.

An angle (α) formed by diametrical outer and inner peripheral surfaces on the lower end portion (the lower apex) of each second protrusion was 45°.

Further, recess portions surrounded by the second protrusions and upwardly concaved in the form of truncated cones were formed on the lower sides of the first protrusions. The inner diameter (L5) of the upper surface of each recess portion was 100 µm.

The die was formed in the aforementioned shape by casting employing a mold.

Thus, the through-hole forming apparatus was prepared.

### (Formation of Through-Holes)

A semi-hardened resin sheet (in B stage) having a thickness of 200 µm was formed by applying varnish of thermosetting silicone resin to the upper surface of the substrate and thereafter heating the same to 100°C (see FIG. 5(a)).

Then, the die was pressed downward while the substrate was fixed in the vertical direction, so that the die hot-presses the substrate (see FIG. 5(b)). The hot pressing step was carried out at a pressure of 1.0 MPa and a temperature of 180°C for a pressing time (a clamping time) of 15 minutes.

The thermosetting silicone resin was completely hardened by the hot pressing.

Thereafter the die was pulled up (see FIG. 5(c)), and the resin sheet was subsequently pulled up from the substrate (see FIG. 5(d)).

Thus, through-holes were formed in the resin sheet to pass through the same in the thickness direction.

The through-holes were aligned in 20 lines in the longitudinal direction and 20 lines in the lateral direction at intervals from one another. The inner diameter of each through-hole was 300 µm, and the interval between each pair of through-holes was 200 µm.

### Comparative Example 1

Through-holes were formed in a resin sheet similarly to Example 1, except that no second protrusions (see FIG. 3) were provided on lower end portions of first protrusions of a die (see FIG. 6(a)) in preparation of a through-hole forming apparatus (see FIGS. 6(a) to 6(d)).

The whole lower end surfaces 8 of first protrusions 7 were planarly formed (see FIG. 6(a)). In other words, the first protrusions 7 were rectangularly formed in section. More specifically, peripheral edge portions of lower end portions o the first protrusions 7 were perpendicularly formed in sectional view along the vertical direction.

However, residues 19 of thermosetting silicone resin were formed on lower portions of portions to be provided with through-holes 3 after hot pressing with a die 5, as shown in FIG. 6(b). When a resin sheet 2 was thereafter pulled up, flashes 22 resulting from the residues 19 were formed on peripheral edge portions of the lower portions of the through-hole 3, as shown in FIG. 6(d).

## Claims

1. A method of producing a resin sheet, comprising the steps of:
arranging a resin sheet between a substrate and a die opposed to the substrate; and
forming a through-hole in the resin sheet to pass through the resin sheet in a pressing direction by relatively pressing the die against the substrate, wherein
the die includes a first protrusion protruding toward a downstream side in the pressing direction,
a second protrusion protruding toward the downstream side in the pressing direction is formed on a peripheral edge portion of an end portion of the first protrusion on the downstream side in the pressing direction, and
an end portion of the second protrusion on the downstream side in the pressing direction is formed at an acute angle in sectional view along the pressing direction.

2. The method of producing a resin sheet according to Claim 1, wherein
an angle of the end portion of the second protrusion on the downstream side in the pressing direction is 30 to 75° in sectional view along the pressing direction.

3. The method of producing a resin sheet according to Claim 1 or 2, wherein
the length of the second protrusion in the pressing direction is 20 to 200 µm.

4. The method of producing a resin sheet according to Claim 1, 2 or 3 wherein
the first protrusion is formed into a pillarlike shape, and
a recess portion surrounded by the second protrusion and concaved toward an upstream side in the pressing direction is formed on the first protrusion on the downstream side in the pressing direction.

5. A resin sheet obtained by a method of producing a resin sheet comprising the steps of:
arranging a resin sheet between a substrate and a die opposed to the substrate; and
forming a through-hole in the resin sheet to pass through the resin sheet in a pressing direction by relatively pressing the die against the substrate, wherein
the die includes a first protrusion protruding toward a downstream side in the
a second protrusion protruding toward the downstream side in the pressing direction is formed on a peripheral edge portion of an end portion of the first protrusion on the downstream side in the pressing direction, and
an end portion of the second protrusion on the downstream side in the pressing direction is formed at an acute angle in sectional view along the pressing direction.

6. A through-hole forming apparatus for forming a through-hole in a resin sheet to pass through the resin sheet in the thickness direction, comprising:
a substrate; and
a die opposed to the substrate for relatively pressing the substrate, wherein
the die includes a first protrusion protruding toward a downstream side in the pressing direction,
a second protrusion protruding toward the downstream side in the pressing direction is formed on a peripheral edge portion of an end portion of the first protrusion on the downstream side in the pressing direction, and
an end portion of the second protrusion on the downstream side in the pressing direction is formed at an acute angle in sectional view along the pressing direction.
